# EUROPEAN PATENT APPLICATION

(11) **EP 3 564 067 A1**
(43) Date of publication of application: **06.11.2019**
(21) Application number: 17885885.8
(22) Date of filing: 30.11.2017
(51) Int. Cl.: B60N 2/28

(54) **CHILD SEAT**

(30) Priority: 27.12.2016 JP 2016252663
(71) Applicant: Car Mate Mfg. Co., Ltd., Toshima-ku Tokyo 171-0051 (JP)
(72) Inventor: TAMURA Naoyuki, Tokyo 171-0051 (JP); ANDO Hiroki, Tokyo 171-0051 (JP); KAWASHIMA Yuya, Tokyo 171-0051 (JP); HASUMI Syunichi, Tokyo 171-0051 (JP); ISHIKAWA Morimichi, Tokyo 171-0051 (JP)
(74) Representative: Lambacher, Michael
(86) International application number: PCT/JP2017/043213
(87) International publication number: WO 2018/123438

(57) **Abstract**

To provide a child seat capable of facilitating operation of an abutting member that moves from a platform on a seat to a back side of a seat, a child seat (10) includes: a sitting seat (12) for an infant; a platform (14) that supports the sitting seat (12) and is mounted to the seat; an abutting member (20) installed in the platform (14) and disposed between the sitting seat (12) and the seat; and a position adjusting means (30) that moves the abutting member (20) from the platform (14) to the seat side. The position adjusting means (30) has a control unit (32) provided on the abutting member (20) side.

## Description

### FIELD OF THE INVENTION

The present invention relates to a child seat having a sitting seat of a platform mounted to a seat of a vehicle or the like and an abutting member (also referred to as an anti-rebound support or a pressing member) disposed in a gap between the sitting seat and the seat and pushed and fixed to the seat side.

### BACKGROUND OF THE INVENTION

It is mandatory to use a child seat in a seat in order to guarantee safety when an infant is placed on a vehicle.

In this case, the child seat is securely fixed by pushing an abutting member to the back side of the seat to remove a gap between the sitting seat of the platform mounted to a seat of a vehicle or the like and the seat.

A child seat having a sitting seat, a platform, and an abutting member has been discussed in Patent Document 1 of the prior art, in which the abutting member is fixed to a predetermined position using a control lever.

### [Citation List]

### [Patent Documents]

Patent Document 1: U.S. Patent No. 5,971,479

### SUMMARY OF THE INVENTION

However, in the child seat discussed in Patent Document 1, the control lever of the abutting member is installed in the platform side. Therefore, in order to manipulate the abutting member, the abutting member is moved to the seat side using one of hands while the other hand manipulates the control lever. In this case, although it is necessary to strongly press the abutting member, it is difficult to exert a strong force and securely fix the child seat because the abutting member is operated using only one hand.

In view of the aforementioned problems of the prior art, it is therefore an object of the present invention to provide a child seat capable of facilitating manipulation of the abutting member moving from the platform on the seat to the back side of the seat.

According to the present invention, as a first means for addressing the aforementioned problems, there is provided a child seat including: a sitting seat for an infant; a platform configured to support the sitting seat and mounted to a seat; an abutting member installed in the platform and disposed between the sitting seat and the seat; and a position adjustment means configured to move the abutting member from the platform to the seat side, wherein the position adjustment means has a control unit provided on the abutting member side.

In the first means described above, it is possible to perform manipulation for moving the abutting member toward the seat side while the abutting member is unlocked using the control unit. In addition, it is possible to perform manipulation for pushing the abutting member from the platform to the seat side using both hands and facilitate secure contact between the seat and abutting member. Therefore, it is possible to stably fix the child seat to the seat.

According to the present invention, as a second means for addressing the aforementioned problems, there is provided the child seat, wherein, in the first means, the control unit is provided in any one of a front face facing the sitting seat side, a side face, or a top face of the abutting member, or a circumferential surface of an opening provided in the abutting member.

In the second means described above, it is possible to facilitate manipulation of the control unit provided on the abutting member side. In addition, it is possible to perform the manipulation for moving the abutting member to the seat side while unlocking the abutting member.

According to the present invention, as a third means for addressing the aforementioned problems, there is provided the child seat, wherein, in the first or second means, the abutting member has a shaft at one end side rotatably supported to the platform, the position adjustment means has a locking unit configured to fix the abutting member at a predetermined angle and a connecting portion configured to connect the control unit for releasing the locking unit and the locking unit, and the locking unit is installed in the platform.

In the third means described above, it is possible to adjust and fix the abutting member at an arbitrary angle, apply various angles to the sitting seat, and improve mountability. In addition, in a case where the sitting seat faces the back side, it is possible to secure a wide sitting space for an infant, particularly, in the foot position.

According to the present invention, as a fourth means for addressing the aforementioned problems, there is provided the child seat according to claim 1 or 2, wherein, in the first or second means, the abutting member has a rail extending from the platform to the seat side, and a slider that slides along the rail, and the position adjustment means has a driving source for advancing or retracting the slider.

In the fourth means described above, it is possible to cause the abutting member and the back side of the seat to abut on each other. In addition, in a case where the sitting seat faces the back side, it is possible to secure a wide sitting space for an infant, particularly, in the foot position.

According to the present invention, using the control unit provided on the abutting member side, it is possible to perform manipulation for unlocking the abutting member and manipulation for securely pushing the abutting member from the platform to the seat side at the same time. Therefore, it is possible to stably fix the child seat to the seat.

### BRIEF DESCRIPTION OF DRAWINGS

FIG. 1 is an explanatory diagram illustrating a child seat according to an embodiment of the invention;
FIG. 2 is an explanatory diagram illustrating an abutting member and a position adjustment means;
FIG. 3 is an explanatory diagram illustrating how to manipulate the abutting member using the position adjustment means;
FIG. 4 is an explanatory diagram illustrating a sitting seat;
FIG. 5 is an explanatory diagram illustrating a first modification of a control unit;
FIG. 6 is an explanatory diagram illustrating a second modification of the control unit;
FIG. 7 is an explanatory diagram illustrating a modification of a connecting portion; and
FIG. 8 is an explanatory diagram illustrating a modification of the position adjustment means.

### DESCRIPTION OF EMBODIMENTS

A child seat according to an embodiment of the invention will now be described in details with reference to the accompanying drawings.

### (Child Seat 10)

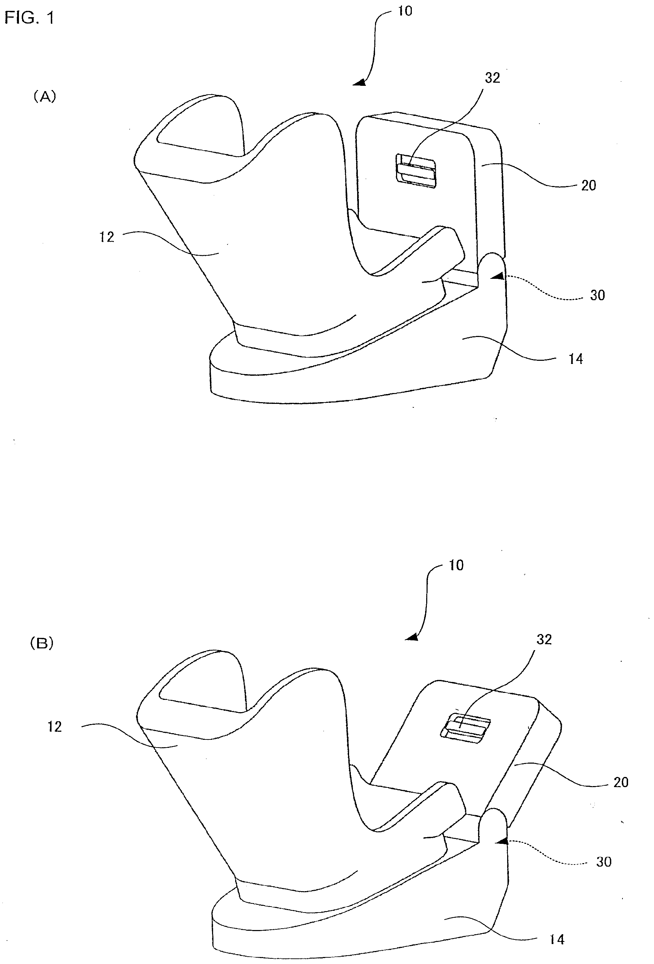

FIG. 1 is an explanatory diagram illustrating a child seat according to an embodiment of the invention, in which FIG. 1(A) illustrates an initial position of an abutting member, and FIG. 1(B) illustrates the abutting member when it moves toward a seat side. As illustrated, the child seat 10 according to the present invention includes a sitting seat 12 for an infant, a platform 14 that rotatably supports the sitting seat 12 at a predetermined position and is mounted to the seat, an abutting member 20 installed in the platform 14 and disposed between the sitting seat 12 and the seat, and a position adjustment means 30 for moving the abutting member 20 from the platform 14 to the back side of the seat.

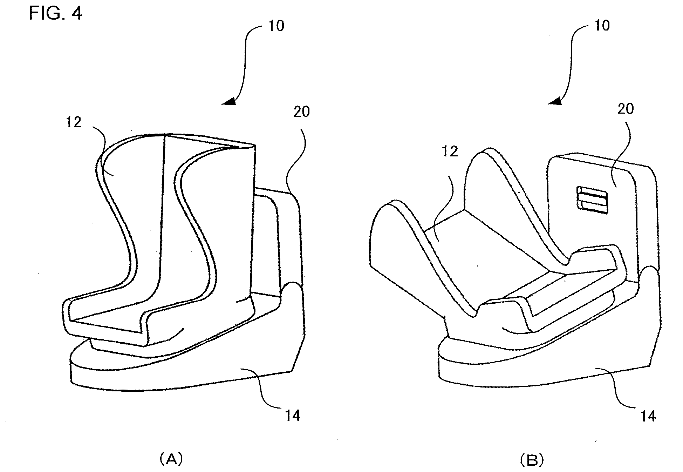

FIG. 4 is an explanatory diagram illustrating a sitting seat. In the child seat 10 according to the present invention, the sitting seat 12 may be mounted in any direction such as in a front direction (backseat side) as illustrated in FIG. 1, in a backside direction (front glass side) as illustrated in FIG. 4(A), or in a lateral direction (side door side) as illustrated in FIG. 4(B).

### (Abutting Member 20)

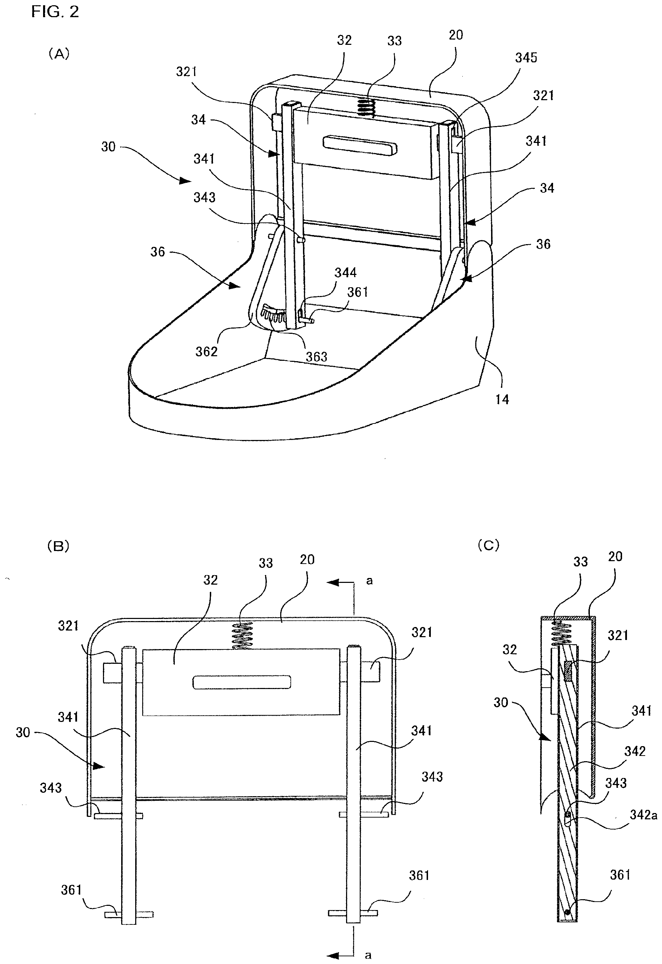

FIG. 2 is an explanatory diagram illustrating the abutting member and the position adjustment means, in which FIG. 2(A) is a perspective view, FIG. 2(B) is a partial front view illustrating the abutting member and the position adjustment means, and FIG. 2(C) is a cross-sectional view taken along the line a-a of FIG. 2(B).

As illustrated, the abutting member 20 is installed in the platform 14, so that it is disposed between the platform 14 and the back side of the seat when the platform 14 is mounted to the seat. The abutting member 20 has a variable shaft 343 provided on one end side (as a component of a connecting portion 34 of a seat shift means 30 described below) and rotatably supported to the platform 14, and the other end is swingable with respect to the variable shaft. Such an abutting member 20 can be sloped depending on an inclination angle of the back side of the seat. The abutting member 20 has a control unit 32 of the seat shift means 30 described below, installed in the front face (in the sitting seat 12 side).

### (Position Adjustment Means 30)

The position adjustment means 30 has a control unit 32, a connecting portion 34, and a locking unit 36.

The control unit 32 is a control button (lever) for unlocking the abutting member 20 locked (fixed) to a predetermined position, and is installed in the abutting member 20 side (the control unit 32 of FIG. 1 is installed in the front face of the abutting member 20). The control unit 32 of FIGS. 1 and 2 employs a vertical slidable type. Specifically, a structure of the control unit 32 has a coil spring 33 between an upper part of the abutting member 20 and a button in order to bias the button from the upper part to the lower part of the abutting member 20.

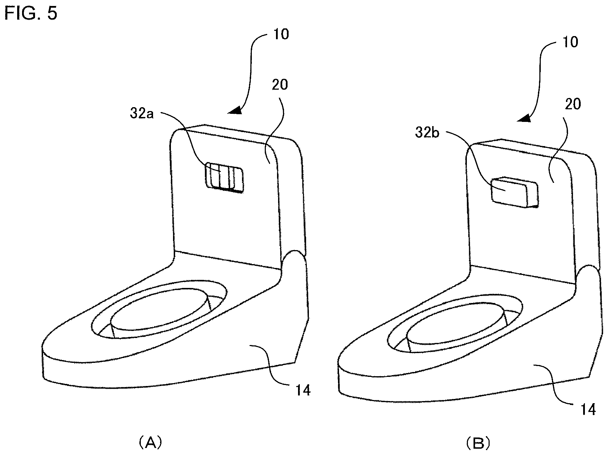

FIG. 5 is an explanatory diagram illustrating a first modification of the control unit. The control unit 32a of FIG. 5(A) is provided on a front face of the abutting member 20 and employs a type slidable in the left/right direction. The control unit 32b of FIG. 5(B) is provided on the front face of the abutting member 20 and employs a type pressed in a thickness direction.

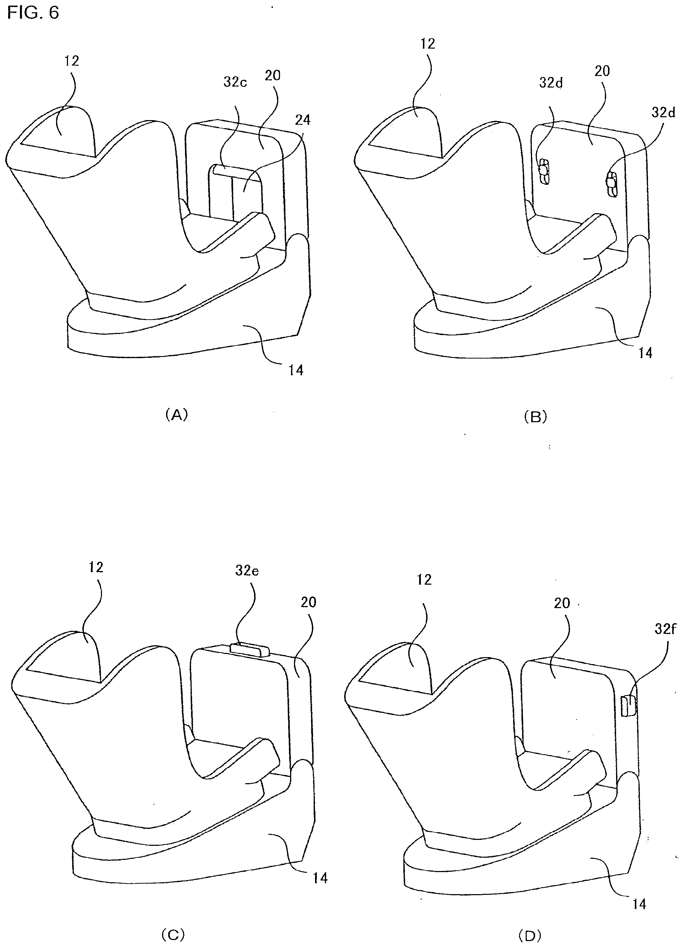

FIG. 6 is an explanatory diagram illustrating a second modification of the control unit. The control unit 32c of FIG. 6(A) is installed in a circumferential surface of an opening 24 provided in the center of the abutting member 20. The control unit 32d of FIG. 6(B) has a pair of left and right control units on the front face of the abutting member 20 and employs a type slidable in the vertical direction. The control unit 32e of FIG. 6(C) is provided on a top face of the abutting member 20 and employs a type pressed downward of the abutting member 20. The control unit 32f of FIG. 6(D) has a pair of control units provided on the left and right side faces of the abutting member 20 and employs a type pressed inward of the abutting member 20.

The connecting portion 34 is a member that connects the control unit 32 and the locking unit 36. Specifically, the connecting portion 34 is structured with a pair of frames 341, a pair of coupling bars 342, and a pair of variable shafts 343 to interpose the control unit 32 therebetween. The frame 341 is a tubular member having one end side fixed to the abutting member 20, a slot 345 where a fixing piece 321 of the control unit 32 penetrates, and the other end side extending to the platform 14 side along a longitudinal direction of the abutting member 20. The slot 345 has a length set to match a movement length of the control unit 32. The variable shaft 343 is installed in a middle part of the frame 341. The variable shaft 343 has a shaft core extending in the thickness direction of the frame 341 and is fixed to penetrate the frame 341. The variable shaft 343 is pivotally supported to the platform 14 side. The frame 341 is rotatable around the axis of the variable shaft 343, and the mount angle of the abutting member 20 against the platform 14 can also be adjusted as the frame 341 is swung.

A slot 344 where a lock pin 361 of the locking unit 36 described below penetrates is provided on the other end side of the frame 341. The length of the slot 344 is set to match the movement length of the control unit 32.

The coupling bar 342 is a plate-like member inserted into the inside of the frame 341. The coupling bar 342 has one end side fixed to the fixing piece 321 of the control unit 32 and the other end side installed with the lock pin 361. Similar to the variable shaft 343, the lock pin 361 has a shaft core extending along the thickness direction of the coupling bar 342 and is fixed to penetrate the coupling bar 342. A middle part of the coupling bar 342 is provided with a slot 342a where the variable shaft 343 penetrates. The length of the slot 342a is set to match the movement length of the control unit 32.

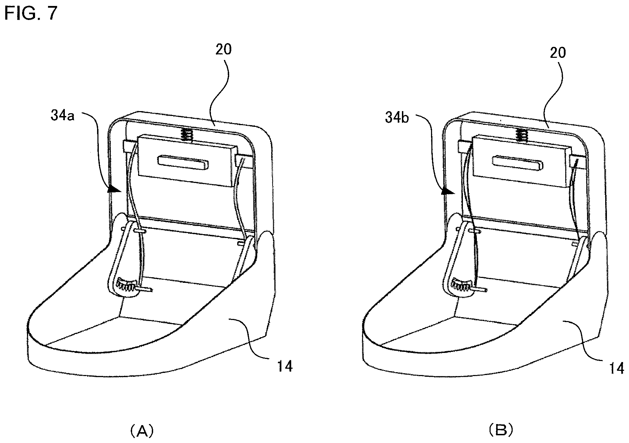

FIG. 7 is an explanatory diagram illustrating a modification of the connecting portion. The connecting portion may have any other structure, instead of the connection using the coupling bar 342, as long as an operation instruction of the control unit 32 can be transmitted. The connecting portion 34a of FIG. 7(A) employs a wire coupling type. By employing a configuration for coupling the control unit and the locking unit using a wire cable, it is possible to improve freedom in structure and arrangement of the control unit and the locking unit. In addition, since responsiveness of the control unit is improved, it is possible to facilitate manipulation.

The connecting portion 34b of FIG. 7(B) may also employ an electronic control type based on wired or wireless communication (not shown). By employing a control type based on wired or wireless communication, it is possible to save space.

The locking unit 36 has a lock pin 361 and an angle plate 362. The angle plate 362 is fixed to a side face of the platform 14. The angle plate 362 is a plate member having one end side fixed to the variable shaft 343 and the other end side formed in a fan shape widened from the variable shaft 343. The other end side of the angle plate 362 has an arc-shaped hole with respect to the variable shaft 343, and a plurality of pin grooves 363 are formed in the hole. The pin grooves 363 are sized to allow fitting of the lock pin 361 and have depths set to match the movement length of the control unit 32.

The locking unit 36 may have any other structure, instead of the fixation based on sliding of the lock pin 361, as long as the abutting member 20 can be fixed to a predetermined position. For example, a meshing type clutch structure, a drum brake type, a disk brake type, a ratchet type, or the like may also be employed.

### (Functional Effects)

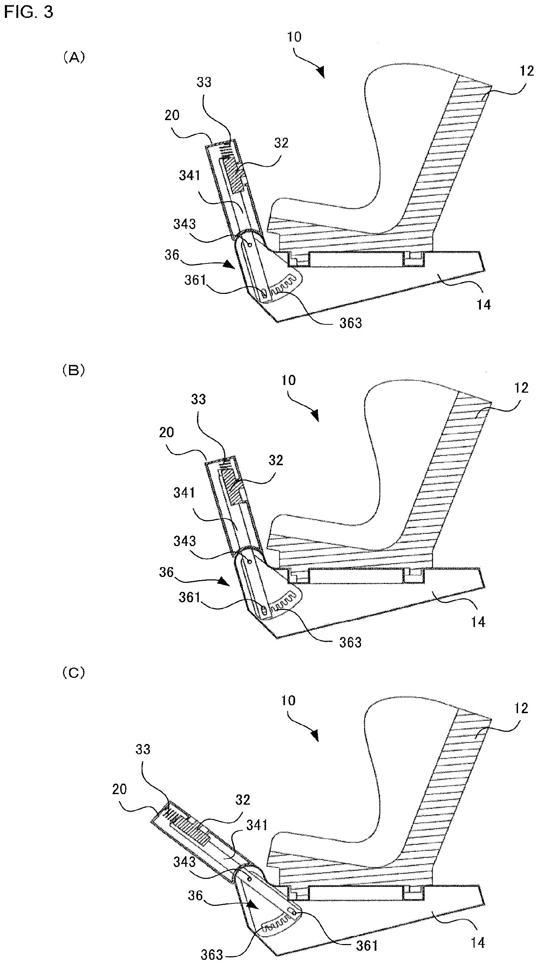

FIG. 3 is an explanatory diagram illustrating how to manipulate the abutting member using the position adjustment means.

As illustrated in FIG. 3(A), the abutting member 20 is locked in the most upright position when the child seat 10 is mounted to the seat of the vehicle.

As illustrated in FIG. 3(B), in a case where the abutting member 20 moves toward the seat side for adjustment, first, unlocking is performed at the current position. Then, the control unit 32 slides upward. As the control unit 32 slides upward, the coupling bar 342 fixed to the control unit 32 by the fixing piece 321 also slides upward inside the frame 341. The lock pin 361 fixed to the other end side of the coupling bar 342 also slides upward and is removed from the pin groove 363.

As illustrated in FIG. 3(C), if the abutting member 20 moves toward the back side of the seat while a state of the control unit 32 sliding upward is maintained, the abutting member 20 is bent at a predetermined angle with respect to the platform 14. If a hand is released from the control unit 32 while the abutting member 20 is pushed to the back side of the seat, the control unit 32 slides downward by virtue of the biasing force of the coil spring 33. As the control unit 32 slides downward, the coupling bar 342 fixed to the control unit 32 by using the fixing piece 321 also slides downward inside the frame 341. The lock pin 361 fixed to the other end side of the coupling bar 342 also slides downward and is fitted to the pin groove 363. As a result, it is possible to lock (fix) the abutting member 20 in a bent state at a predetermined angle.

### (Modification of Position Adjustment Means)

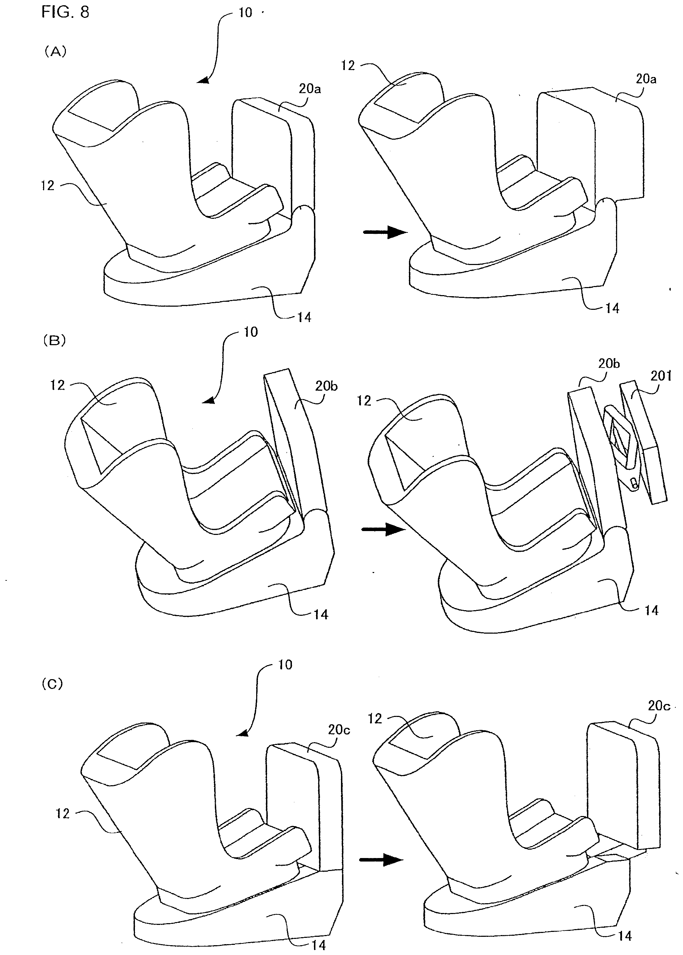

FIG. 8 is an explanatory diagram illustrating a modification of the position adjustment means.

In FIG. 8(A), the abutting member 20a has a hollow body inflatable toward the seat side by supplying gas or fluid to the internal space. The position adjustment means has a pump that can supply or discharge gas (for example, the air) or liquid (for example, water) to/from the abutting member having the hollow body structure. The control unit is installed in the abutting member. In the child seat having such a structure, the abutting member 20a comes into contact with the seat by inflating toward the seat side if the gas or liquid is supplied using the position adjustment means by manipulating the control unit provided in the abutting member 20a after the platform is mounted to the seat. As a result, the abutting member filled with the fluid is pressed to the entire seat without a gap, so that the abutting member can tightly abut on the seat, and mountability can be improved. In addition, compared to a configuration in which the abutting member locally comes into contact with the seat, the contact area increases. Therefore, it is possible to reduce damage by distributing the load applied to the seat and the abutting member.

FIG. 8(B) illustrates a structure of the abutting member 20b obtained by applying a multi-link mechanism. The multi-link mechanism has a plurality of links, each of which has a pair of intersecting rods, and the centers of both rods are rotatably connected. One end side of the multi-link mechanism is fixed to the abutting member 20b, and the other end side is fixed to the abutting plate 201. The position adjustment means is a driving source such as a driving motor for telescoping the multi-link mechanism. In the child seat having such a structure, after the platform is mounted to the seat, the multi-link mechanism expands by manipulating the control unit of the abutting member 20b, so that the abutting plate 201 comes into contact with the back side of the seat. As a result, the pressing using the multi-link mechanism can generate a strong pushing force even with a weak force. Therefore, it is possible to securely fix the child seat to the seat while reducing a burden of the handling user.

FIG. 8(C) illustrates an abutting member 20c having a slide mechanism. The slide mechanism has a rail extending from the platform to the seat side, and a slider that slides on the rail. The abutting member 20c is fixed to the slider.

The position adjustment means is a driving source such as a driving motor for expanding or contracting the slide mechanism. In the child seat having such a structure, after the platform is mounted to the seat, the slide mechanism expands by manipulating the control unit of the abutting member 20c, and the abutting member 20c comes into contact with the back side of the seat. As a result, it is possible to securely fix the child seat to the seat.

The present invention can be widely applied to a child seat for an infant.

### [Reference Signs List]

- 10: child seat,
- 12: sitting seat,
- 14: platform,
- 20: abutting member,
- 30: position adjustment means,
- 32: control unit,
- 33: coil spring,
- 34: connecting portion,
- 36: locking unit.

## Claims

1. A child seat comprising:
a sitting seat for an infant;
a platform configured to support the sitting seat and mounted to a seat;
an abutting member installed in the platform and disposed between the sitting seat and the seat; and
a position adjustment means configured to move the abutting member from the platform to the seat side,
wherein the position adjustment means has a control unit provided on the abutting member side.

2. The child seat according to claim 1, wherein the control unit is provided in any one of a front face facing the sitting seat side, a side face, or a top face of the abutting member, or a circumferential surface of an opening provided in the abutting member.

3. The child seat according to claim 1 or 2, wherein the abutting member has a shaft at one end side rotatably supported to the platform,
the position adjustment means has a locking unit configured to fix the abutting member at a predetermined angle, and a connecting portion configured to connect the control unit for releasing the locking unit and the locking unit, and
the locking unit is installed in the platform.

4. The child seat according to claim 1 or 2, wherein the abutting member has a rail extending from the platform to the seat side, and a slider that slides along the rail, and
the position adjustment means has a driving source for advancing or retracting the slider.
